# FASCICULE DE BREVET EUROPEEN

(11) **EP 3 362 947 B1**
(45) Date de publication et mention de la délivrance du brevet: **25.11.2020**
(21) Numéro de dépôt: 16794699.5
(22) Date de dépôt: 12.10.2016
(51) Int. Cl.: G06K 19/06

(54) **PROCÉDÉ DE SÉCURISATION D'UN CODE-BARRES 2D**
VERFAHREN ZUR SICHERUNG EINES 2D-BARCODES
METHOD FOR MAKING A 2D BARCODE SECURE

(30) Priorité: 13.10.2015 FR 1559724
(43) Date de publication de la demande: 22.08.2018
(73) Titulaire: SURYS, 77607 Marne-la-Vallée Cedex 3 (FR)
(72) Inventeur: PIC, Marc, 92100 Boulogne Billancourt (FR)
(74) Mandataire: Bouvier, Thibault
(86) Numéro de dépôt international: PCT/FR2016/052628
(87) Numéro de publication internationale: WO 2017/064414

(56) Documents cités:
- WO-A1-2014/044174
- US-A1- 2009 212 109

## Description

### DOMAINE DE L'INVENTION

La présente invention concerne le domaine des codes-barres à deux dimensions, dits codes-barres 2D.

Tout type de message alphanumérique ou kenji peut être codé en code-barres 2D par des procédés et des algorithmes bien connus de l'homme du métier.

Le plus souvent à ce jour, un code-barres 2D présente une forme qui s'inscrit dans un rectangle (indistinctement un carré). On citera à titre d'exemples non-exhaustifs, les codes-barres 2D tels que PDF417, DataMatrix, QR-Code, Aztec Code, MaxiCode, Codablock F, etc.

D'autres types de codage (par exemple de type Shot Code), permettent d'obtenir un code-barres 2D dont la forme s'inscrit dans un cercle.

Une fois le protocole de codage déterminé, la forme dans laquelle s'inscrit le code-barres 2D reste identique quel que soit le contenu du message.

Un code-barres 2D comprend généralement des repères d'orientation (points, lignes, symboles), ou amers, qui, par leur position relative, permettent de pouvoir ré-orienter ledit code-barres 2D lors de sa lecture.

En outre, la plupart du temps, les codes-barres 2D sont construits avec un certain degré de redondance, ce qui permet de pouvoir lire un code-barres 2D même lorsque celui-ci est partiellement dégradé physiquement.

Par construction, les repères sont généralement situés en périphérie du code-barres 2D et le message est codé à l'intérieur dudit code-barres.

Cette disposition permet effectivement une certaine redondance du message dans le code-barres 2D.

Toutefois si la périphérie du code-barres 2D est dégradée physiquement, par exemple par usure, ou optiquement, par exemple parce qu'il est au moins partiellement recouvert, alors le code-barres 2D ne peut plus être lu.

En outre, lors de la lecture d'un code-barres 2D, il peut exister un problème de tolérance entre la position du code-barres 2D et la position de la fenêtre de lecture d'un lecteur optique, de sorte que si la fenêtre de lecture ne couvre pas complètement le code-barres 2D, celui-ci ne peut être lu. La fenêtre de lecture d'un lecteur optique (par exemple une douchette) doit donc être sensiblement plus grande que le code.

Par ailleurs, il peut également exister un problème de tolérance entre la position du code-barres 2D et une fenêtre (par exemple pré-imprimée) souvent préexistante sur un support, à travers laquelle le code-barres 2D doit être lu, et par conséquent dans laquelle le code-barres 2D doit être centré,

Dans ce domaine, il est connu le document US2009/0212109 qui prévoit de créer un code-barres 2D à au moins 9 motifs identiques dans lequel 8 copies partielles ou complètes sont positionnées adjacentes autour d'un motif initial, ce qui permet de résoudre des problèmes d'alignement de lecteur par rapport au motif initial, mais sous la contrainte de devoir dimensionner un capteur optique de sorte que sa fenêtre de lecture soit inférieure à la dimension du code-barres 2D à 9 motifs identiques, voire de devoir inverser le contraste d'un motif sur deux. En outre, selon ce document, la taille du code-barres 2D est donc 4 ou 9 fois celle du motif initial.

La présente invention vise à résoudre ce double problème de tolérance et de dimension globale en proposant un procédé de sécurisation d'un code-barres 2D initial, tant dans un nouveau codage d'un code-barres 2D initial préexistant que par un décodage correspondant.

A cet effet, elle exploite astucieusement la caractéristique de forme d'un code-barres 2D initial.

Grâce à l'invention, dans les cas où il existe une fenêtre préexistante sur un support légèrement plus grande que le code-barres 2D à inscrire, il est alors possible d'inscrire le code-barres 2D sans tolérance de positionnement à l'intérieur de cette fenêtre.

Avantageusement, l'invention est indépendante du protocole de codage utilisé pour le code-barres initial.

### RESUME DE L'INVENTION

Plus précisément, l'invention concerne selon un premier de ses objets, un procédé de codage d'un code-barres 2D initial, comprenant des étapes consistant à :
- Générer ou fournir ledit code-barres 2D initial, ledit code-barres 2D initial comprenant un ensemble de modules binaires individuels et présentant une forme comprenant un ensemble de sommets.

Il est essentiellement caractérisé en ce qu'il comprend en outre des étapes consistant à :
- Dupliquer le code-barres 2D initial pour créer autant de copies (C1, C2, C3, C4) que la forme du code-barres 2D initial comprend de sommets ;
- Assembler les copies (C1, C2, C3, C4) du code-barres 2D initial sous forme de mosaïque autour d'un premier repère (O1) ;
- Positionner une première fenêtre d'extraction graphique (FEG1) qui agit comme un obturateur optique, de sorte à ce que l'ouverture de ladite première fenêtre graphique (FEG1) couvre simultanément au moins le centre dudit premier repère (O1) et au moins un sommet respectif de chaque copie (C1, C2, C3, C4) du code-barres 2D initial ; et
- Dimensionner la première fenêtre graphique (FEG1) de sorte que la somme de la surface des copies (C1, C2, C3, C4) du code-barres 2D initial couvertes par l'ouverture de la première fenêtre graphique (FEG1) soit supérieure ou égale à la surface du code-barres 2D initial, ladite première fenêtre graphique (FEG1) présentant une forme prédéterminée, éventuellement quelconque.

On peut prévoir, en outre, une étape consistant à extraire sous forme d'image numérique (IMG) enregistrée dans une mémoire, l'image des copies (C1, C2, C3, C4) du code-barres 2D initial extraite par la première fenêtre graphique (FEG1).

Grâce à ces caractéristiques, un lecteur de code-barres standard ne peut pas lire l'image numérique selon l'invention.

On peut prévoir, en outre, une étape consistant à positionner le centre de la première fenêtre graphique (FEG1) sur une position éventuellement différente de celle du centre du premier repère (O1).

Cette caractéristique permet notamment de faciliter la fabrication de l'image numérique selon l'invention.

Ladite première fenêtre graphique (FEG1) peut être un obturateur structurel ou un masque physique.

Une telle première fenêtre graphique (FEG1) matérielle est liée par exemple à la construction du produit (ou étiquette ou emballage) final sur, respectivement dans, lequel l'image (IMG) selon l'invention est apposée ou intégrée. La position de la première fenêtre graphique (FEG1) par rapport premier repère (O1) est liée aux tolérances de fabrication dudit produit.

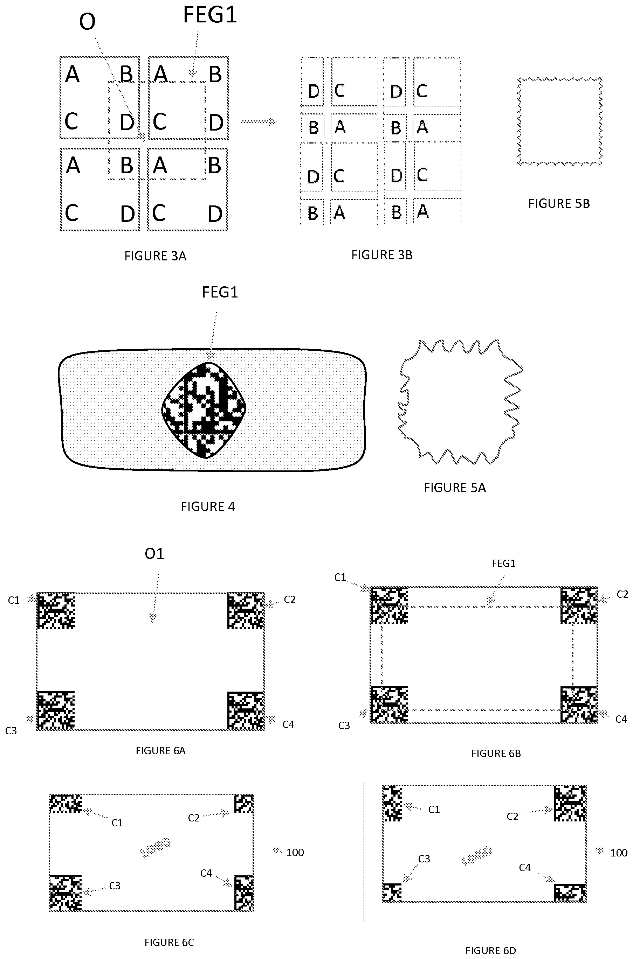

La présente invention permet de s'affranchir d'un positionnement précis où le centre de la première fenêtre graphique (FEG1) devrait coïncider avec celui du centre du premier repère (O1). La dimension de la première fenêtre graphique (FEG1) est supérieure ou égale à la dimension du code-barres 2D initial. Grâce au positionnement des copies (C1, C2, C3, C4) du code-barres 2D initial, la position du centre de la première fenêtre graphique (FEG1) peut être distincte de celle du centre du premier repère (O1), comme illustré figure 4, ce qui permet de s'affranchir des tolérances de fabrication, en particulier lors d'impression sur des surfaces de dimensions réduites ou contraintes.

La présente invention tire même un avantage à ce que la position du centre de la première fenêtre graphique (FEG1) diffère de celle du centre du premier repère (O1) pour créer un identifiant.

On peut prévoir en outre, préalablement à l'étape d'extraction de l'image numérique (IMG), une étape consistant à positionner les copies (C1, C2, C3, C4) du code-barres 2D initial toutes parallèles en elles et orientées dans le même sens ; le sens d'orientation des copies (C1, C2, C3, C4) du code-barres 2D initial étant éventuellement différent de celui code-du barres 2D initial.

On peut prévoir en outre une étape consistant à positionner les copies (C1, C2, C3, C4) du code-barres 2D initial de sorte que la distance entre toutes les copies adjacentes est constante, et éventuellement nulle.

On peut prévoir en outre une étape consistant à redimensionner le code-barres 2D initial ou l'assemblage des copies (C1, C2, C3, C4) du code-barres 2D initial.

Cette caractéristique permet notamment d'adapter la dimension des copies C1, C2, C3, C4 à des contraintes de fabrication.

On peut prévoir en outre au moins l'une des étapes parmi :
- imprimer l'image numérique (IMG) sur un support ;
- apposer l'image numérique (IMG) sur un support ;
- intégrer l'image numérique (IMG) dans un produit comprenant un ensemble de couches, une étiquette ou un emballage.

Selon un autre de ses objets, l'invention concerne un procédé de décodage d'un code-barres 2D codé selon l'invention, et comprenant des étapes consistant à :
- acquérir l'image numérique (IMG) imprimée, apposée ou intégrée par un capteur optique ;
- enregistrer ladite image numérique (IMG) acquise par le capteur dans une mémoire ;
- dupliquer l'image numérique (IMG) enregistrée pour créer autant de copies (IMG_C1, IMG_C2, IMG_C3, IMG_C4) que la forme du code-barres 2D initial comprend de sommets ;
- assembler les copies (IMG_C1, IMG_C2, IMG_C3, IMG_C4) de l'image numérique (IMG) sous forme de mosaïque autour d'un deuxième repère (O2);
- extraire une partie de l'assemblage des copies (IMG_C1, IMG_C2, IMG_C3, IMG_C4) de l'image numérique (IMG), par une deuxième fenêtre d'extraction graphique (FEG2) qui agit comme un obturateur optique et qui couvre ledit deuxième repère (O2) et l'ensemble des sommets de l'assemblage des copies (IMG_C1, IMG_C2, IMG_C3 et IMG_C4) de l'image numérique.

On peut prévoir en outre une étape consistant à superposer au moins partiellement deux copies d'images (C1, C2, C3, C4 ; IMG_C1, IMG_C2, IMG_C3, IMG_C4) de sorte que les modules binaires individuels communs à deux copies d'images (C1, C2, C3, C4 ; IMG_C1, IMG_C2, IMG_C3, IMG_C4) soient superposés.

On peut prévoir en outre des étapes consistant à :
- enregistrer dans une mémoire la position réelle du repère réel (O1_R) par rapport auquel les copies (C1, C2, C3 et C4) du code-barres 2D initial sont positionnées, et
- associer dans une mémoire cette valeur de position à un identifiant dudit code-barres 2D initial, ou à un identifiant desdites copies (C1, C2, C3 et C4) dudit code-barres 2D initial afin de générer une signature dudit code-barres 2D initial.

Enfin, l'invention concerne également un programme d'ordinateur comprenant des instructions de code de programme pour l'exécution des étapes du procédé selon l'invention, lorsque ledit programme est exécuté sur un ordinateur.

Grâce à l'invention, la surface de la deuxième fenêtre graphique peut être comprise entre 1 et 4 fois la surface totale du code-barres 2D inital.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- la figure 1A illustre un code-barres 2D initial ;
- la figure 1B illustre la duplication du code-barres 2D initial de la figure 1A selon l'invention ;
- la figure 1C illustre un positionnement des code-barres 2D dupliqués de la figure 1B selon l'invention ;
- la figure 1D illustre un autre positionnement des code-barres 2D dupliqués de la figure 1B selon l'invention ;
- la figure 1E illustre les code-barres 2D dupliqués de la figure 1D où les codes de synchronisation adjacents au premier repère ont été remplacés par un trait noir plein ;
- la figure 1F illustre les code-barres 2D dupliqués de la figure 1D où un trait noir plein a été ajouté de manière adjacente aux codes de synchronisation adjacents au premier repère ;
- la figure 2A illustre le code-barres 2D de la figure 1A dans lequel les modules binaires individuels ont été supprimés, et les lettres ABCD placées sur un sommet respectif ;
- la figure 2B illustre un positionnement des code-barres 2D dupliqués selon l'invention, ainsi que le positionnement d'une première fenêtre graphique selon l'invention ,
- la figure 2C illustre une image obtenue après application de la première fenêtre graphique de la figure 2B ;
- la figure 2D illustre un assemblage de copies de l'image de la figure 2C sous forme de mosaïque selon l'invention, ainsi qu'une deuxième fenêtre graphique selon l'invention ;
- la figure 2E illustre la reconstruction du code-barres 2D initial à partir de l'extraction graphique selon l'invention obtenue après application de la deuxième fenêtre graphique de la figure 2D ;
- la figure 3A illustre une variante de la figure 2B dans laquelle la position de la première fenêtre graphique est différente ;
- la figure 3B illustre la reconstruction du code-barres 2D initial à partir de l'extraction graphique selon l'invention obtenue après application de la deuxième fenêtre graphique de la figure 3A ;
- la figure 4 illustre une variante de première fenêtre graphique selon l'invention ;
- la figure 5A et la figure 5B illustrent deux variantes de forme de première fenêtre graphique selon l'invention dont les contours sont respectivement irréguliers et crénelés ;
- la figure 6A illustre un autre positionnement des codes-barres 2D dupliqués selon l'invention ;
- la figure 6B illustre le positionnement d'une première fenêtre graphique selon l'invention sur les codes-barres 2D dupliqués de la figure 6A ;
- la figure 6C illustre l'image extraite par la première fenêtre graphique de la figure 6B ; et
- la figure 6D illustre l'image extraite par un autre positionnement de la première fenêtre graphique de la figure 6B sur les mêmes codes-barres 2D dupliqués de la figure 6A.

### DESCRIPTION DETAILLEE

Par souci de clarté et de concision, il est fait référence dans la description à un code-barres 2D dont la forme s'insère dans un rectangle ou un carré. Un carré étant une forme particulière de rectangle, on ne considérera ici qu'une forme rectangulaire.

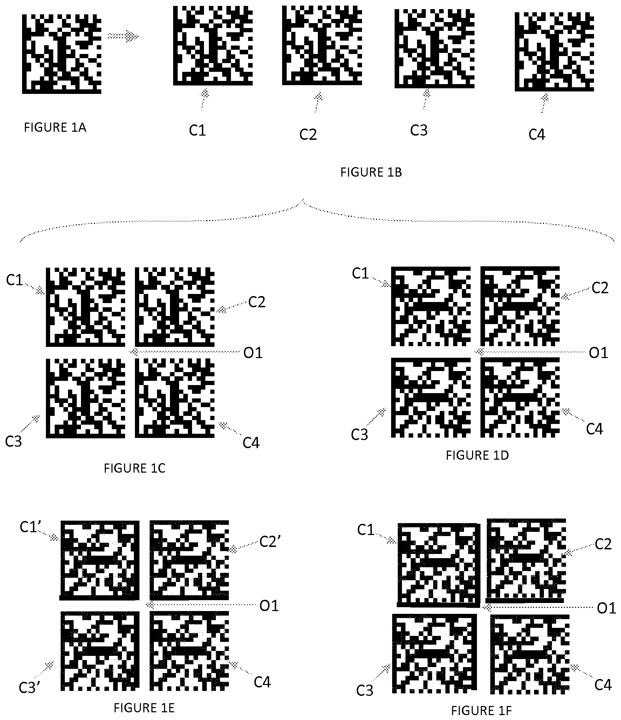

La figure 1A illustre un code-barres 2D initial, généré par tout générateur de code standard, dans lequel un message a été codé par tout protocole approprié. En l'espèce le code-barres 2D initial est un datamatrix, mais l'invention est généralisable à d'autres types de codage.

Un datamatrix comprend un ensemble de modules individuels noirs ou blancs. La bordure de celui-ci comprend :
- une structure en L, dite motif de recherche, constituée deux lignes pleines orthogonales et dans lesquelles tous les modules individuels sont noirs ; et
- deux autres lignes opposées orthogonales, dites de synchronisation, dans lesquelles tous les modules individuels sont alternativement et successivement noirs et blancs.

### CREATION

Une étape consiste à dupliquer le code-barres 2D initial autant de fois que de sommets de la forme du code-barres 2D initial. Le nombre de sommets est connu et enregistré dans une mémoire. Il peut être prédéfini ou calculé après une étape de lecture par un capteur optique décrite ultérieurement. En l'espèce, comme illustré figure 1B, le code-barres 2D initial est rectangulaire donc dupliqué 4 fois pour créer 4 copies C1, C2, C3, C4.

Ensuite, on prévoit de d'assembler les copies C1, C2, C3, C4 du code-barres 2D initial sous forme de mosaïque.

Les copies C1, C2, C3, C4 du code-barres 2D initial sont positionnées autour d'un premier repère O1, dans ce cas de sorte qu'aucune copie de se superpose à une autre.

La distance entre deux copies de code-barres 2D initial adjacentes est de préférence constante (figure 1C, figure 1D) ou nulle, de sorte que le premier repère O1 présente une forme de croix.

Les copies C1, C2, C3, C4 du code-barres 2D initial sont ainsi juxtaposées deux à deux, comme illustré figure 1C ou figure 1D, ou encore figure 6A.

Le premier repère O1 peut être une origine de repère graphique ou un graphisme de référence. En l'espèce, le premier repère O1 est en forme de croix régulière (figures 1C-1E) ou non régulière (figure 1F, figure 6A).

De préférence, on prévoit que les copies C1, C2, C3, C4 du code-barres 2D initial sont toutes parallèles en elles et orientées dans le même sens (figure 1C, figure 1D) : les côtés adjacents de deux copies adjacentes sont parallèles entre eux, et aucune copie C1, C2, C3 ou C4 ne subit de rotation de 90°, 180° ou 270° dans le plan du code-barres 2D initial par rapport à une autre copie.

On peut prévoir que toutes les copies C1, C2, C3, C4 subissent une même rotation de 90°, 180° ou 270° dans le plan du code-barres 2D initial. Par exemple dans la figure 1D, chaque copie C1, C2, C3, C4 a subi une rotation de 90° vers la droite dans son plan par rapport aux copies C1, C2, C3, C4 de la figure 1C.

Ainsi la forme de l'assemblage des copies C1, C2, C3, C4 du code-barres 2D initial est identique à la forme du code-barres 2D initial, en l'espèce un rectangle.

En l'espèce, sur la figure 1D ou la figure 1E, chaque copie C1, C2, C3, C4 du code-barres 2D initial est disposée sous forme de mosaïque carrée, c'est-à-dire dans une cellule respective d'un tableau carré à 2 lignes et 2 colonnes.

Le sens d'orientation des copies du code-barres 2D initial peut être le même que celui code-du barres 2D initial (figure 1C) ou différent (figure 1D).

De préférence, la distance entre deux copies de code-barres 2D initial adjacentes peut être constante (comme illustré figure 1C), et éventuellement nulle.

On peut toutefois prévoir des décalages pour introduire des zones additionnelles de silence ou des repères surnuméraires pour faciliter le ciblage du code-barres transformé, c'est-à-dire avec les copies assemblées. Ces repères additionnels vont servir lors des phases de relecture à faciliter l'assemblage des différentes copies C1, C2, C3, C4.

Par exemple, comme illustré sur la figure 1F, la distance séparant la copie C1 de la copie C2 est plus petite que la distance séparant la copie C3 de la copie C4.

On peut prévoir de positionner les différentes copies C1, C2, C3, C4 de sorte à augmenter le contraste du premier repère O1.

A cet effet, on peut prévoir qu'un maximum des contours du premier repère O1 soient matérialisés par un trait plein.

Dans une première variante, illustrée figure 1E, les copies C1, C2, C3, C4 sont toutes orientées dans le même sens que celles de la figure 1D, mais les codes de synchronisation d'au moins une ligne d'une copie, en l'espèce adjacents au premier repère O1, sont remplacés par une ligne noire. En l'espèce, par rapport à la figure 1D :
- sur la copie C1', les deux lignes de synchronisation ont été remplacées par une ligne noire ;
- sur la copie C2', la ligne de synchronisation faisant face à la copie C4 a été remplacée par une ligne noire ;
- sur la copie C3', la ligne de synchronisation faisant face à la copie C4 a été remplacée par une ligne noire ; et
- la copie C4 est inchangée.

L'apostrophe signifie que la copie a été altérée.

Dans une deuxième variante, illustrée figure 1F, les copies C1, C2, C3, C4 sont toutes orientées dans le même sens que celles de la figure 1D, mais une ligne noire est ajoutée de manière adjacente aux lignes des codes de synchronisation adjacentes au premier repère O1. En l'espèce, par rapport à la figure 1D :
- sur la copie C1, deux lignes noires ont été ajoutées, une adjacente à la copie C2 et une autre adjacente à la copie C3;
- sur la copie C2, une ligne noire a été ajoutée adjacente à la copie C4 ;
- sur la copie C3, une ligne noire a été ajoutée adjacente à la copie C4 ; et
- la copie C4 est inchangée.

On peut prévoir une étape consistant à redimensionner, en particulier à réduire les dimensions du code-barres 2D initial lors de la création des copies C1, C2, C3, C4, ou réduire les dimensions de l'assemblage des copies C1, C2, C3, C4 du code-barres 2D initial une fois lesdites copies C1, C2, C3, C4 créées.

On prévoit ensuite une étape consistant à tronquer un partie au moins de l'assemblage des copies C1, C2, C3, C4 du code-barres 2D initial, comme illustré figure 4 ou figure 6B . La troncature peut être réalisée soit par troncature effective des copies imprimées C1, C2, C3, C4 du code-barres 2D initial ; soit, comme illustré figure 4 ou figure 6B, par superposition d'une première fenêtre graphique FEG1 faisant office d'obturateur optique sur l'assemblage des copies C1, C2, C3, C4. L'avantage dans ce cas réside dans le fait que le centre de la première fenêtre graphique FEG1 peut ne pas coïncider avec le centre du premier repère O1, ce qui est particulièrement avantageux lors de l'impression de l'image numérique IMG décrite ultérieurement.

On peut combiner l'étape de redimensionnement et celle de troncature. Ce qui permet par exemple d'optimiser la quantité d'information à écrire en intégrant la tolérance de positionnement du centre de la première fenêtre graphique FEG1 avec le premier repère O1 en amont de l'obturation par la première fenêtre graphique FEG1.

La présente invention est avantageusement indépendante du contenu du message codé dans le code-barres 2D initial ainsi que du protocole de codage utilisé pour le code-barres 2D initial ; la position particulière des modules binaires individuels (carrés blancs/noirs) du datamatrix qui codent le message est donc inutile à la compréhension de la présente invention.

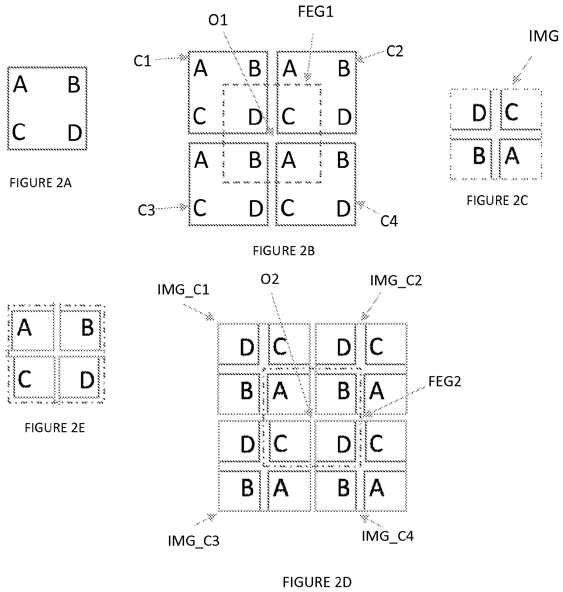

Aussi pour plus de lisibilité des figures, il est fait maintenant référence aux figures 2A à 2D dans lesquelles la figure 2A illustre le code-barres de la figure 1A dans lequel les modules binaires individuels (carrés blancs/noirs) du datamatrix ont été supprimés, et les lettres ABCD sont placées chacune sur un sommet respectif du datamatrix afin d'illustrer l'orientation de celui-ci.

En l'espèce les sommets A, B, C et D correspondent respectivement au sommet haut gauche, haut droit, bas gauche et bas droit du code-barres 2D initial de la figure 1A, ou de l'une quelconque des copies C1, C2, C3 et C4 lorsqu'elles sont orientées dans le même sens que le code-barres 2D initial (figure 1C).

Dans ce mode de représentation, la figure 2B est donc l'équivalent de l'assemblage des copies C1, C2, C3, C4 du code-barres 2D initial sur la figure 1C.

Ainsi, autour dudit premier repère O1 sont distribués : un premier sommet D de la première copie C1, un deuxième sommet C de la deuxième copie C2, un troisième sommet B de la troisième copie C3, et un quatrième sommet A de la quatrième copie C4 (figure 2B).

La distance, de préférence constante, entre un sommet dupliqué et le premier repère O1 est inférieure à une valeur seuil prédéterminée.

### EXTRACTION

On prévoit alors une étape consistant à extraire sous forme d'image numérique IMG enregistrée dans une mémoire, une partie de l'assemblage des copies C1, C2, C3, C4 du code-barres 2D initial.

En l'espèce, l'extraction est mise en œuvre par une première fenêtre d'extraction graphique FEG1 représentée en pointillés sur la figure 2B et la figure 6B, qui agit comme un obturateur optique. Par exemple, on peut prévoir d'imprimer les copies C1, C2, C3, C4 du code-barres 2D initial ; de les recouvrir par un film opaque comprenant une fenêtre transparente FEG1 superposée à une partie au moins de l'assemblage des copies C1, C2, C3, C4 du code-barres 2D initial ; et de réaliser une prise de vue par un capteur optique.

La première fenêtre d'extraction graphique FEG1 couvre le premier repère O1 et une partie au moins de chaque code-barres 2D dupliqué et positionné.

La première fenêtre d'extraction graphique FEG1 peut être centrée sur le premier repère O1, comme illustré figure 2B ou décalée, comme illustrée sur la figure 3A.

Selon la position de la première fenêtre d'extraction graphique FEG1, le résultat de l'extraction peut être différent. Par exemple, la figure 6A illustre un positionnement des copies C1, C2, C3, C4 autour d'un repère O1 en forme de croix. La figure 6B illustre un premier positionnement d'une première fenêtre graphique FEG1 (en pointillés sur la figure 6B) sur les copies C1, C2, C3, C4 de la figure 6A. La figure 6C illustre le résultat de l'extraction avec la première fenêtre d'extraction graphique FEG1 positionnée selon la figure 6B. En revanche, la figure 6D illustre le résultat de l'extraction avec la première fenêtre d'extraction graphique FEG1 positionnée selon un autre positionnement que celui de la figure 6B sur les mêmes copies C1, C2, C3, C4 de la figure 6A. Entre la figure 6C et la figure 6D, il est clair qu'un même code initial, et un même positionnement de copies C1, C2, C3, C4 donne des résultats de l'extraction différents selon la position de la première fenêtre graphique FEG1.

La première fenêtre graphique FEG1 est dimensionnée de sorte que la somme de la surface des copies C1, C2, C3, C4 du code-barres 2D initial couvertes par l'ouverture de la première fenêtre graphique FEG1 est supérieure ou égale à la surface du code-barres 2D initial. L'assemblage des copies C1, C2, C3, C4 extraites par la première fenêtre graphique FEG1, lesdits extraits étant éventuellement superposés, doit permettre de reconstruire la totalité du code-barres initial, comme décrit ultérieurement.

Les dimensions de la première fenêtre d'extraction graphique FEG1 peuvent être supérieures à celles du code-barres 2D initial éventuellement redimensionné.

Toutefois, grâce à l'invention, les dimensions de la première fenêtre d'extraction graphique FEG1 peuvent être égales à celles du code-barres 2D initial éventuellement redimensionné, ce qui est particulièrement avantageux pour des raisons exposées ultérieurement dans la partie « Reconstruction ».

Dans un mode de réalisation, la forme de la première fenêtre d'extraction graphique FEG1 est identique à celle du code-barres 2D initial (figure 2B).

De préférence, on prévoit que l'orientation de la première fenêtre d'extraction graphique est la même que celle de l'ensemble des codes-barres 2D dupliqués et positionnés (figure 2B).

Le résultat d'une extraction selon un mode de réalisation de fenêtre graphique FEG1 carrée est illustré figure 2C. Dans ce mode de réalisation, l'image IMG est carrée et les pointillés ne sont que l'illustration des contours de l'image IMG.

Dans un autre mode de réalisation, la forme de la première fenêtre d'extraction graphique FEG1 est différente de celle du code-barres 2D initial, c'est-à-dire éventuellement quelconque (figure 4). Dans ce cas, on prévoit que la surface couverte par la première fenêtre d'extraction graphique FEG1 est supérieure ou égale à celle du code-barres 2D initial.

### IMPRESSION

L'image IMG peut être imprimée par tout moyen d'impression sur tout type de support. Elle peut être apposée sur un produit ou intégrée dans un produit, en particulier un produit comprenant un ensemble de couches, une étiquette 100 ou un emballage.

Comme illustré figure 6C ou figure 6D par le texte « LOGO », l'image IMG peut également comprendre un graphisme, un texte ou un logo, tant que celui-ci n'altère pas les copies C1, C2, C3, C4.

### LECTURE

L'image IMG imprimée peut être lue par un lecteur de code-barres équipé d'un capteur optique et décodée d'un logiciel de décodage associé.

Cependant, comme l'image IMG est construite selon la présente invention, un lecteur de code-barres standard ne peut la décoder sans modifier préalablement son logiciel de décodage associé comme exposé ci-après.

Cette impossibilité pour un logiciel standard de décoder l'image IMG codée selon la présente invention confère d'ailleurs une forme de sécurité pour l'image IMG.

### RECONSTRUCTION

On prévoit une étape d'acquisition de l'image IMG imprimée par un capteur optique.

L'image IMG acquise est ensuite enregistrée dans une mémoire et décodée par un logiciel de décodage pour en extraire le message du code-barres 2D initial par reconstruction dudit code-barres 2D initial.

A cet effet, on prévoit une étape consistant à dupliquer 4 fois l'image IMG enregistrée, c'est-à-dire autant de fois que de sommets.

On obtient 4 copies IMG_C1, IMG_C2, IMG_C3 et IMG_C4 de l'image IMG

Ensuite, on prévoit d'assembler les 4 copies IMG_C1, IMG_C2, IMG_C3 et IMG_C4 de l'image IMG sous forme de mosaïque (figure 2D), en l'espèce carrée.

La position de chacun des 4 sommets de chaque copie IMG_C1, IMG_C2, IMG_C3 et IMG_C4 est connue (préalablement ou déterminée par lecture de la position des repères d'orientation).

Pour des raisons de lisibilité de la figure 2D, les pointillés illustratifs du pourtour de l'image IMG de la figure 2C ont été remplacés par des traits pleins pour le pourtour de chaque copie IMG_C1, IMG_C2, IMG_C3 et IMG_C4 dans la figure 2D afin de rendre plus lisible la deuxième fenêtre graphique FEG2, illustrée en pointillés.

Les copies IMG_C1, IMG_C2, IMG_C3 et IMG_C4 de l'image IMG enregistrée sont ainsi juxtaposées deux à deux, comme illustré figure 2D, de sorte à reconstruire la forme dans laquelle s'inscrit le code-barres 2D initial.

La distance entre deux copies adjacentes d'image peut être constante ou éventuellement nulle.

Les copies IMG_C1, IMG_C2, IMG_C3 et IMG_C4 de l'image IMG enregistrée sont positionnées autour d'un deuxième repère O2, dans ce cas de sorte qu'aucune copie ne se superpose à une autre.

Le deuxième repère O2 peut être une origine, un repère graphique ou un graphisme de référence.

Les copies IMG_C1, IMG_C2, IMG_C3 et IMG_C4 de l'image IMG enregistrée sont toutes parallèles en elles : les côtés adjacents de deux copies adjacentes sont parallèles entre eux.

On peut prévoir une étape consistant à vérifier que les copies IMG_C1, IMG_C2, IMG_C3 et IMG_C4 de l'image IMG enregistrée soient toutes orientées dans le même sens.

Si l'une au moins des copies IMG_C1, IMG_C2, IMG_C3 et IMG_C4 a subi une rotation de 90°, 180° ou 270° dans le plan du code-barres 2D initial par rapport à une copie de référence, on prévoit une étape de redressement consistant à faire subir une contre rotation de 90°, 180° ou 270° dans le plan du code-barres 2D initial par rapport à ladite copie de référence, de sorte que toutes les copies IMG_C1, IMG_C2, IMG_C3 et IMG_C4 soient orientées dans le même sens pour la reconstruction. La rotation éventuellement subie par une copie de l'image IMG ainsi que l'angle de rotation sont détectés et déterminés par la position des repères d'orientation, ou par connaissance de l'algorithme utilisé pour la création de l'image IMG.

Ainsi la forme de l'assemblage des copies IMG_C1, IMG_C2, IMG_C3 et IMG_C4 dupliquées et positionnées est identique à la forme du code-barres 2D initial, en l'espèce un rectangle.

On prévoit alors d'extraire une partie de l'assemblage des copies IMG_C1, IMG_C2, IMG_C3 et IMG_C4 dupliquées et positionnées par une deuxième fenêtre graphique FEG2, qui fonctionne également comme un obturateur optique.

La taille et la forme de la deuxième fenêtre graphique FEG2 est identique à celle du code-barres 2D initial éventuellement redimensionné (modulo les dimensions du deuxième repère O2).

La deuxième fenêtre d'extraction graphique FEG2 couvre le deuxième repère O2 et l'ensemble des sommets A, B, C et D de l'assemblage des copies IMG_C1, IMG_C2, IMG_C3 et IMG_C4, en l'espèce exclusivement un seul sommet par copie, c'est-à-dire le sommet le plus proche du deuxième repère O2, et dans le cas de la figure 2D : un premier sommet A de la première copie IMG_C1, un deuxième sommet B de la deuxième copie IMG_C2, un troisième sommet C de la troisième copie IMG_C3, et un quatrième sommet D de la quatrième copie IMG_C4, les sommets étant diamétralement opposés deux à deux par rapport au deuxième repère O2.

Dans ce cas, la deuxième fenêtre d'extraction graphique FEG2 est centrée sur le deuxième repère O2.

La deuxième fenêtre d'extraction graphique FEG2 peut être exclusivement logicielle.

L'extraction de l'assemblage des copies IMG_C1, IMG_C2, IMG_C3 et IMG_C4 par la deuxième fenêtre graphique FEG2 reconstruit le code-barres 2D initial (figure 2E) et le message peut alors être extrait par tout logiciel standard.

La forme de la deuxième fenêtre d'extraction graphique FEG2 est de préférence identique à celle du code-barres 2D initial (figure 2D).

Il est possible de déterminer la position du premier repère O1 grâce à la position relative des repères de position dans les copies IMG_C1, IMG_C2, IMG_C3 et IMG_C4.

Par construction de l'assemblage des copies C1, C2, C3 et C4, il existe des marges de tolérance de sorte que la position réelle O1_R du premier repère O1 par rapport auquel les copies C1, C2, C3 et C4 sont positionnées est variable et aléatoire dans un espace donné par rapport au centre de la première fenêtre graphique FEG1.

On peut avantageusement utiliser cette variabilité de position pour générer une signature d'un assemblage donné des copies C1, C2, C3, C4 du code-barres 2D initial.

A cet effet, on prévoit d'enregistrer la position du repère réel O1_R par rapport auquel les copies C1, C2, C3 et C4 sont positionnées, et d'associer cette valeur à un identifiant dudit code-barres 2D initial, ou un identifiant desdites copies C1, C2, C3 et C4.

Lorsque la forme de la première fenêtre d'extraction graphique est différente de celle du code-barres 2D initial (figure 4), on prévoit que les copies C1, C2, C3 et C4 et IMG_C1, IMG_C2, IMG_C3 et IMG_C4 se superposent partiellement: les modules binaires individuels communs à deux images sont superposés.

### EXEMPLES DE REALISATION

La première fenêtre d'extraction graphique FEG1 peut être mise en œuvre sous forme logicielle. Elle peut également être mise en œuvre sous forme matérielle.

Dans une première variante, la présente invention est mise en œuvre dans la fabrication de documents multicouches sécurisés, par exemple de type passeport ou carte d'identité.

Ce type de document comprend notamment une couche de base en polycarbonate, opaque au marquage laser.

Une couche transparente sensible au marquage laser par carbonisation localisée est déposée sur la couche de base. La couche transparente peut être directement au contact de la couche de base.

Une couche opaque munie d'une fenêtre de transparence est déposée sur la couche transparente sensible au marquage laser. Dans ce cas, la fenêtre de transparence est la première fenêtre d'extraction graphique FEG1 et permet l'observation, à l'œil ou par capteur, des éléments de personnalisation ci-dessous.

La fabrication de ce type de document sécurisé comprend une étape de personnalisation, réalisée en reprise par marquage laser de la couche transparente, et par l'introduction d'un code-barres 2D sur la couche transparente sensible au marquage laser.

Cependant, la position des éléments de personnalisation, en particulier du code-barres 2D, peut être légèrement imprécise pour diverses raisons mécaniques de fabrication.

L'introduction d'un code à barre classique, c'est-à-dire réalisé selon l'art antérieur, nécessite de ménager des marges, ou « blanc tournant », autour dudit code-barres 2D pour garantir la lisibilité de la totalité du code à travers la fenêtre de transparence.

Au contraire, grâce à l'invention, la taille de la fenêtre peut être réduite au strict minimum, aucun blanc tournant n'est nécessaire.

La première fenêtre d'extraction graphique peut être excentrée par rapport au code-barres 2D.

La position relative de la première fenêtre d'extraction graphique et du code-barres 2D peut même être relativement imprécise tant qu'elle respecte les conditions précédemment exposées.

Il peut exister une ou plusieurs couches intermédiaires entre la couche de base et la couche transparente ou entre la couche opaque munie d'une fenêtre de transparence et la couche transparente.

Dans une seconde variante, l'invention peut être mise en œuvre dans le domaine de la protection contre la contrefaçon pour lesquels des dispositifs optiquement variables (par exemple des hologrammes) sont apposés sur ou intégrés à des produits finis ou des emballages.

On prévoit alors de réaliser une première fenêtre d'extraction graphique FEG1 dans le dispositif optiquement variable, typiquement par dé-métallisation de celui-ci. Ledit dispositif optiquement variable est alors apposé sur un code-barres 2D selon l'invention avant d'être apposé sur ou intégré à un produit fini ou un emballage.

On peut prévoir en outre d'enregistrer dans une base de données de référence une prise de vue numérique, dite de référence, dudit dispositif optiquement variable comprenant ledit code-barres 2D selon l'invention. Ultérieurement, une prise de vue numérique, dite de challenge, dudit dispositif optiquement variable comprenant ledit code-barres 2D selon l'invention peut être comparée à la prise de vue de référence pour l'authentification du produit fini ou de l'emballage. Par exemple la position du centre du code-barres 2D dans la première fenêtre d'extraction graphique est utilisée comme index dans la base de données de référence.

Dans un autre exemple de mise en œuvre, combinable avec les précédents, la première fenêtre d'extraction graphique présente une forme dont les contours présentent un motif décoratif et/ou susceptible de se marier harmonieusement à l'esthétique du produit fini (figure 5A). Par exemple, il peut aussi être envisagé de garder une forme de fenêtre régulière mais avec un contour crénelé (type dentelure régulière d'un timbre-poste, figure 5B).

## Revendications

1. Procédé de codage d'un code-barres 2D initial, comprenant des étapes consistant à :
- Générer ou fournir ledit code-barres 2D initial, ledit code-barres 2D initial comprenant un ensemble de modules binaires individuels et présentant une forme comprenant un ensemble de sommets ;
**Caractérisé en ce qu'**il comprend en outre des étapes consistant à :
- Dupliquer le code-barres 2D initial pour créer autant de copies (C1, C2, C3, C4) que la forme du code-barres 2D initial comprend de sommets ;
- Assembler les copies (C1, C2, C3, C4) du code-barres 2D initial sous forme de mosaïque autour d'un premier repère (O1) ;
- Positionner une première fenêtre d'extraction graphique (FEG1) qui agit comme un obturateur optique, de sorte à ce que l'ouverture de ladite première fenêtre graphique (FEG1) couvre simultanément au moins le centre dudit premier repère (O1) et au moins un sommet respectif de chaque copie (C1, C2, C3, C4) du code-barres 2D initial ; et
- Dimensionner la première fenêtre graphique (FEG1) de sorte que la somme de la surface des copies (C1, C2, C3, C4) du code-barres 2D initial couvertes par l'ouverture de la première fenêtre graphique (FEG1) soit supérieure ou égale à la surface du code-barres 2D initial, ladite première fenêtre graphique (FEG1) présentant une forme prédéterminée, éventuellement quelconque.

2. Procédé selon la revendication 1, comprenant en outre une étape consistant à :
- Extraire sous forme d'image numérique (IMG) enregistrée dans une mémoire, l'image des copies (C1, C2, C3, C4) du code-barres 2D initial extraite par la première fenêtre graphique (FEG1),
Le procédé comprenant optionnellement en outre une étape consistant à :
positionner le centre de la première fenêtre graphique (FEG1) sur une position éventuellement différente de celle du centre du premier repère (O1), ladite première fenêtre graphique (FEG1) pouvant être un obturateur structurel ou un masque physique.

3. Procédé selon la revendication 2, comprenant en outre, préalablement à l'étape d'extraction de l'image numérique (IMG), une étape consistant à positionner les copies (C1, C2, C3, C4) du code-barres 2D initial toutes parallèles en elles et orientées dans le même sens ; le sens d'orientation des copies (C1, C2, C3, C4) du code-barres 2D initial étant éventuellement différent de celui dudit code-barres 2D initial.

4. Procédé selon l'une quelconque des revendications précédentes, comprenant en outre une étape consistant à positionner les copies (C1, C2, C3, C4) du code-barres 2D initial de sorte que la distance entre toutes les copies adjacentes est constante, et éventuellement nulle.

5. Procédé selon l'une quelconque des revendications précédentes, comprenant en outre une étape consistant à redimensionner le code-barres 2D initial ou l'assemblage des copies (C1, C2, C3, C4) du code-barres 2D initial.

6. Procédé selon l'une quelconque des revendications 2 à 5, comprenant en outre au moins l'une des étapes parmi :
- imprimer l'image numérique (IMG) sur un support ;
- apposer l'image numérique (IMG) sur un support ;
- intégrer l'image numérique (IMG) dans un produit comprenant un ensemble de couches, une étiquette ou un emballage.

7. Procédé de décodage d'un code-barres 2D codé selon la revendication 6, et comprenant des étapes consistant à :
- acquérir l'image numérique (IMG) imprimée, apposée ou intégrée par un capteur optique ;
- enregistrer ladite image numérique (IMG) acquise par le capteur dans une mémoire ;
- dupliquer l'image numérique (IMG) enregistrée pour créer autant de copies (IMG_C1, IMG_C2, IMG_C3, IMG_C4) que la forme du code-barres 2D initial comprend de sommets ;
- assembler les copies (IMG_C1, IMG_C2, IMG_C3, IMG_C4) de l'image numérique (IMG) sous forme de mosaïque autour d'un deuxième repère (O2);
- extraire une partie de l'assemblage des copies (IMG_C1, IMG_C2, IMG_C3, IMG_C4) de l'image numérique (IMG), par une deuxième fenêtre d'extraction graphique (FEG2) qui agit comme un obturateur optique et qui couvre ledit deuxième repère (O2) et l'ensemble des sommets de l'assemblage des copies (IMG_C1, IMG_C2, IMG_C3 et IMG_C4) de l'image numérique.

8. Procédé selon la revendication 7, comprenant en outre une étape consistant à superposer au moins partiellement deux copies d'images (C1, C2, C3, C4 ; IMG_C1, IMG_C2, IMG_C3, IMG_C4) de sorte que les modules binaires individuels communs à deux copies d'images (C1, C2, C3, C4 ; IMG_C1, IMG_C2, IMG_C3, IMG_C4) soient superposés.

9. Procédé selon l'une quelconque des revendications 7 ou 8, comprenant en outre des étapes consistant à :
- enregistrer dans une mémoire la position réelle du repère réel (O1_R) par rapport auquel les copies (C1, C2, C3 et C4) du code-barres 2D initial sont positionnées, et
- associer dans une mémoire cette valeur de position à un identifiant dudit code-barres 2D initial, ou à un identifiant desdites copies (C1, C2, C3 et C4) dudit code-barres 2D initial afin de générer une signature dudit code-barres 2D initial.

10. Programme d'ordinateur comprenant des instructions de code de programme pour l'exécution des étapes du procédé selon l'une quelconque des revendications 1 à 6 ou l'une quelconque des revendications 7 à 9, lorsque ledit programme est exécuté sur un ordinateur.

## Patentansprüche

1. Verfahren zur Codierung eines anfänglichen 2D-Barcodes, welches folgende Schritte umfasst:
- Erzeugen oder Bereitstellen des anfänglichen 2D-Barcodes, wobei der anfängliche 2D-Barcode eine Menge von einzelnen binären Modulen umfasst und eine Form aufweist, die eine Menge von Ecken umfasst;
**dadurch gekennzeichnet, dass** es außerdem folgende Schritte umfasst:
- Vervielfältigen des anfänglichen 2D-Barcodes, um so viele Kopien (C1, C2, C3, C4) zu erzeugen, wie die Form des anfänglichen 2D-Barcodes Ecken umfasst;
- Zusammenfügen der Kopien (C1, C2, C3, C4) des anfänglichen 2D-Barcodes in Form eines Mosaiks um eine erste Markierung (01) herum;
- Positionieren eines ersten graphischen Extraktionsfensters (FEG1), welches wie ein optischer Verschluss wirkt, derart, dass die Öffnung des ersten graphischen Fensters (FEG1) gleichzeitig wenigstens den Mittelpunkt der ersten Markierung (01) und wenigstens eine jeweilige Ecke jeder Kopie (C1, C2, C3, C4) des anfänglichen 2D-Barcodes bedeckt; und
- Bemessen des ersten graphischen Fensters (FEG1) derart, dass die Summe der Flächen der Kopien (C1, C2, C3, C4) des anfänglichen 2D-Barcodes, die von der Öffnung des ersten graphischen Fensters (FEG1) bedeckt werden, größer oder gleich der Fläche des anfänglichen 2D-Barcodes ist, wobei das erste graphische Fenster (FEG1) eine vorbestimmte, gegebenenfalls beliebige Form aufweist.

2. Verfahren nach Anspruch 1, welches außerdem einen Schritt umfasst:
- Extrahieren, in Form eines in einem Speicher gespeicherten digitalen Bildes (IMG), des Bildes der Kopien (C1, C2, C3, C4) des anfänglichen 2D-Barcodes, das durch das erste graphische Fenster (FEG1) extrahiert wurde,
wobei das Verfahren optional außerdem einen Schritt umfasst:
Positionieren des Mittelpunktes des ersten graphischen Fensters (FEG1) auf einer Position, die eventuell von derjenigen des Mittelpunktes der ersten Markierung (01) verschieden ist, wobei das erste graphische Fenster (FEG1) ein struktureller Verschluss oder eine physische Maske sein kann.

3. Verfahren nach Anspruch 2, welches außerdem, vor dem Schritt der Extraktion des digitalen Bildes (IMG), einen Schritt des Positionierens aller Kopien (C1, C2, C3, C4) des anfänglichen 2D-Barcodes parallel zueinander und so, dass sie in derselben Richtung ausgerichtet sind, umfasst; wobei die Ausrichtung der Kopien (C1, C2, C3, C4) des anfänglichen 2D-Barcodes eventuell von derjenigen des anfänglichen 2D-Barcodes verschieden ist.

4. Verfahren nach einem der vorhergehenden Ansprüche, welches außerdem einen Schritt des Positionierens der Kopien (C1, C2, C3, C4) des anfänglichen 2D-Barcodes umfasst, derart, dass der Abstand zwischen allen benachbarten Kopien konstant und eventuell null ist.

5. Verfahren nach einem der vorhergehenden Ansprüche, welches außerdem einen Schritt des Änderns der Größe des anfänglichen 2D-Barcodes oder der Zusammenfügung der Kopien (C1, C2, C3, C4) des anfänglichen 2D-Barcodes umfasst.

6. Verfahren nach einem der Ansprüche 2 bis 5, welches außerdem wenigstens einen der folgenden Schritte umfasst:
- Drucken des digitalen Bildes (IMG) auf einen Träger;
- Anbringen des digitalen Bildes (IMG) auf einem Träger;
- Integrieren des digitalen Bildes (IMG) in ein Produkt, das eine Anordnung von Schichten, ein Etikett oder eine Verpackung umfasst.

7. Verfahren zur Decodierung eines gemäß Anspruch 6 codierten 2D-Barcodes, welches folgende Schritte umfasst:
- Erfassen des gedruckten, angebrachten oder integrierten digitalen Bildes (IMG) durch einen optischen Sensor;
- Speichern des durch den Sensor erfassten digitalen Bildes (IMG) in einem Speicher;
- Vervielfältigen des gespeicherten digitalen Bildes (IMG), um so viele Kopien (IMG_C1, IMG_C2, IMG_C3, IMG_C4) zu erzeugen, wie die Form des anfänglichen 2D-Barcodes Ecken umfasst;
- Zusammenfügen der Kopien (IMG_C1, IMG_C2, IMG_C3, IMG_C4) des digitalen Bildes (IMG) in Form eines Mosaiks um eine zweite Markierung (O2) herum;
- Extrahieren eines Teils der Zusammenfügung der Kopien (IMG_C1, IMG_C2, IMG_C3, IMG_C4) des digitalen Bildes (IMG) durch ein zweites graphisches Extraktionsfenster (FEG2), welches wie ein optischer Verschluss wirkt und welches die zweite Markierung (O2) und die Menge der Ecken der Zusammenfügung der Kopien (IMG_C1, IMG_C2, IMG_C3, IMG_C4) des digitalen Bildes bedeckt.

8. Verfahren nach Anspruch 7, welches außerdem einen Schritt des wenigstens teilweisen Überlagerns zweier Kopien von Bildern (C1, C2, C3, C4; IMG_C1, IMG_C2, IMG_C3, IMG_C4) umfasst, derart, dass die einzelnen binären Module, die zwei Kopien von Bildern (C1, C2, C3, C4; IMG_C1, IMG_C2, IMG_C3, IMG_C4) gemeinsam sind, sich überlagern.

9. Verfahren nach einem der Ansprüche 7 oder 8, welches außerdem folgende Schritte umfasst:
- Speichern, in einem Speicher, der tatsächlichen Position der tatsächlichen Markierung (01_R), in Bezug auf welche die Kopien (C1, C2, C3 und C4) des anfänglichen 2D-Barcodes positioniert werden, und
- Zuordnen, in einem Speicher, dieses Positionswertes zu einer Kennung des anfänglichen 2D-Barcodes oder zu einer Kennung der Kopien (C1, C2, C3 und C4) des anfänglichen 2D-Barcodes, um eine Signatur des anfänglichen 2D-Barcodes zu erzeugen.

10. Computerprogramm, welches Programmcodeanweisungen zur Ausführung der Schritte des Verfahrens nach einem der Ansprüche 1 bis 6 oder einem der Ansprüche 7 bis 9, wenn das Programm auf einem Computer ausgeführt wird, umfasst.

## Claims

1. Method for encoding an initial 2D barcode, comprising steps of:
- generating or providing said initial 2D barcode, said initial 2D barcode comprising a set of individual binary modules and having a shape comprising a set of vertices;
**characterized in that** it further comprises steps of:
- replicating the initial 2D barcode to create as many copies (C1, C2, C3, C4) as the shape of the initial 2D barcode comprises vertices;
- assembling the copies (C1, C2, C3, C4) of the initial 2D barcode in the form of a mosaic around a first reference mark (01);
- positioning a first graphical extraction window (FEG1), which acts as an optical shutter, such that the opening of said first graphical window (FEG1) simultaneously covers at least the centre of said first reference mark (O1) and at least one respective vertex of each copy (C1, C2, C3, C4) of the initial 2D barcode; and
- sizing the first graphical window (FEG1) such that the sum of the surface area of the copies (C1, C2, C3, C4) of the initial 2D barcode that are covered by the opening of the first graphical window (FEG1) is greater than or equal to the surface area of the initial 2D barcode, said first graphical window (FEG1) having a predetermined shape, which may be any shape.

2. Method according to Claim 1, further comprising a step of:
- extracting, in the form of a digital image (IMG) stored in a memory, the image of the copies (C1, C2, C3, C4) of the initial 2D barcode, which image was extracted by the first graphical window (FEG1),
the method optionally further comprising a step of:
positioning the centre of the first graphical window (FEG1) at a position that may be different from that of the centre of the first reference mark (O1), said first graphical window (FEG1) possibly being a structural shutter or a physical mask.

3. Method according to Claim 2, further comprising, prior to the step of extracting the digital image (IMG), a step of positioning the copies (C1, C2, C3, C4) of the initial 2D barcode so that they are all parallel with each other and oriented in the same direction; the direction of orientation of the copies (C1, C2, C3, C4) of the initial 2D barcode possibly being different from that of said initial 2D barcode.

4. Method according to any one of the preceding claims, further comprising a step of positioning the copies (C1, C2, C3, C4) of the initial 2D barcode so that the distance between all the adjacent copies is constant, and may be zero.

5. Method according to any one of the preceding claims, further comprising a step of resizing the initial 2D barcode or the assembly of the copies (C1, C2, C3, C4) of the initial 2D barcode.

6. Method according to any one of Claims 2 to 5, further comprising at least one of the following steps:
- printing the digital image (IMG) on a support;
- affixing the digital image (IMG) to a support;
- integrating the digital image (IMG) into a product comprising a set of layers, a label or packaging.

7. Method for decoding a 2D barcode encoded according to Claim 6, comprising steps of:
- acquiring the printed, affixed or integrated digital image (IMG) by means of an optical sensor;
- recording said digital image (IMG) acquired by the sensor in a memory;
- replicating the recorded digital image (IMG) so as to create as many copies (IMG_C1, IMG_C2, IMG_C3, IMG_C4) as the shape of the initial 2D barcode comprises vertices;
- assembling the copies (IMG_C1, IMG_C2, IMG_C3, IMG_C4) of the digital image (IMG) in the form of a mosaic around a second reference mark (02);
- extracting a part of the assembly of the copies (IMG_C1, IMG_C2, IMG_C3, IMG_C4) of the digital image (IMG) by means of a second graphical extraction window (FEG2), which acts as an optical shutter and which covers said second reference mark (O2) and the set of vertices of the assembly of the copies (IMG_C1, IMG_C2, IMG_C3 and IMG_C4) of the digital image.

8. Method according to Claim 7, further comprising a step of at least partially superposing two image copies (C1, C2, C3, C4; IMG_C1, IMG_C2, IMG_C3, IMG_C4) such that the individual binary modules common to two image copies (C1, C2, C3, C4; IMG_C1, IMG_C2, IMG_C3, IMG_C4) are superposed.

9. Method according to either one of Claims 7 and 8, further comprising steps of:
- recording in a memory the actual position of the actual reference mark (O1_R) in relation to which the copies (C1, C2, C3 and C4) of the initial 2D barcode are positioned, and
- associating, in a memory, this position value with an identifier of said initial 2D barcode or with an identifier of said copies (C1, C2, C3 and C4) of said initial 2D barcode so as to generate a signature of said initial 2D barcode.

10. Computer program comprising program code instructions for executing the steps of the method according to any one of Claims 1 to 6 or any one of Claims 7 to 9 when said program is executed on a computer.
